# FASCICULE DE BREVET EUROPEEN

(11) **EP 2 517 532 B1**
(45) Date de publication et mention de la délivrance du brevet: **12.07.2017**
(21) Numéro de dépôt: 10796428.0
(22) Date de dépôt: 24.12.2010
(51) Int. Cl.: H05B 6/14, B29C 65/02

(54) **DISPOSITIF D'ASSEMBLAGE PAR COLLAGE UTILISANT UN CHAUFFAGE PAR INDUCTION**
VORRICHTUNG ZUR MONTAGE VON TEILEN MITTELS BONDING MIT INDUKTIONSHEIZEN
DEVICE FOR ASSEMBLING PARTS BY BONDING BY USING INDUCTION HEATING

(30) Priorité: 24.12.2009 FR 0959566
(43) Date de publication de la demande: 31.10.2012
(73) Titulaire: Roctool, 73370 Le Bourget du Lac (FR)
(72) Inventeur: FEIGENBLUM, José, F-73170 Saint-Paul (FR); GUICHARD, Alexandre, F-73310 La Chapelle du Mont du Chat (FR); MOCELLIN, Yann, F-73410 La Biolle (FR); PERRIER, Damien, F-73100 Aix-les-Bains (FR)
(74) Mandataire: Ipside
(86) Numéro de dépôt international: PCT/EP2010/070718
(87) Numéro de publication internationale: WO 2011/076945

(56) Documents cités:
- FR-A1- 2 174 153
- GB-A- 2 325 982
- US-A- 4 528 057
- US-A1- 2004 050 839

## Description

La présente invention se rapporte à un dispositif d'assemblage par collage comportant des moyens de chauffage inductif, permettant la réticulation de points ou de bandes d'un matériau adhésif, tel qu'une colle, notamment dans le but d'assembler des pièces.

Le dispositif objet de l'invention est particulièrement adapté à l'assemblage de matériaux composites comportant au moins une phase conductrice de l'électricité, tels que des composites comprenant une matrice organique renforcée par des fibres de carbone

Des méthodes pour assembler des structures formées de panneaux électriquement conducteurs au moyen d'un adhésif thermodurcissable chauffé par induction, sont connues de l'art antérieur. Les adhésifs thermodurcissables sont des adhésifs dont la réticulation (ou polymérisation) est obtenue par activation thermique ou par réaction à un rayonnement ultraviolet. Cette réticulation à chaud est obtenue pour certains adhésifs par une réaction exothermique consécutive au mélange de deux composants constitutifs de l'adhésif. D'autres adhésifs nécessitent une source de chaleur externe afin de susciter leur activation thermique. Pour cette dernière catégorie, de nombreuses solutions ont été développées dans le but de réaliser efficacement l'activation thermique de l'adhésif employé.

Un moyen efficace d'apporter la chaleur nécessaire à la réticulation de l'adhésif est le chauffage par induction, à condition que l'adhésif ou au moins un des éléments de la structure à assembler soit électriquement conducteur.

A titre d'exemple brevet américain US-B-4 528 057 décrit une presse apte à réaliser le collage par point de deux plaques métalliques, au moyen d'un adhésif thermodurcissable déposé en revêtement sur la face en vis-à-vis de l'une des plaques. La bobine d'induction sensiblement cylindrique dont l'axe s'étend sensiblement perpendiculairement à l'interface d'assemblage permet de générer un chauffage par induction des plaques métalliques, dans une zone délimitée dans laquelle les plaques sont maintenues fermement en contact l'une de l'autre et ainsi de cuire l'adhésif pour provoquer le collage.

Lorsque les plaques à assembler ne sont pas conductrices, un suscepteur peut être utilisé. Un tel suscepteur est constitué, par exemple, d'une feuille métallique, laquelle feuille métallique est placée entre les plaques à assembler au contact de l'adhésif. Ainsi les courants induits agissent sur le suscepteur, qui, transmettant sa chaleur à l'adhésif, permet la fusion ou la réticulation du dit adhésif et l'assemblage des plaques. Une telle solution est décrite par exemple dans la demande de brevet américaine publiée sous la référence US-A-2004/0050839. Dans cet exemple de réalisation de l'art antérieur, la répartition de l'énergie thermique dans l'épaisseur de l'adhésif est calibrée par le nombre et la position des suscepteurs au contact de la couche adhésive et la sélection de la puissance de l'induction en fonction de l'épaisseur de la couche adhésive et de l'épaisseur des suscepteurs. La présence de ces suscepteurs qui restent prisonniers de la couche adhésive n'est pas toujours adaptée au collage de pièces structurales.

Dans le cas de l'assemblage de matériaux composites, particulièrement lorsque ceux-ci sont constitués d'une phase conductrice de l'électricité, telle que des fibres de carbone et une phase isolante, telle qu'une résine époxyde, ces techniques de l'art antérieur sont peu opérantes car la phase conductrice est susceptible d'agir comme une cage de Faraday et que la phase isolante est généralement sensible à la dégradation thermique ou brûlure. Ainsi, le suscepteur ne peut être chauffé à travers de la couche de fibres et l'augmentation de la puissance d'induction conduit à la brûlure de la phase isolante du composite.

Afin de résoudre les insuffisances de l'art antérieur, l'invention concerne un dispositif d'assemblage permettant le collage par points, au moyen d'un adhésif activable thermiquement, notamment thermodurcissable, placé à l'interface d'assemblage, de deux pièces dont au moins une est constituée d'un matériau électriquement conducteur, notamment un matériau composite comportant une phase conductrice, le dispositif comprenant :
- une bobine d'induction destinée à chauffer la surface en contact avec l'adhésif d'au moins une des pièces à assembler en contact avec l'adhésif ;
- un carter rigide à l'intérieur duquel est disposée la bobine d'induction ;
- une tête de contact située à une extrémité libre du carter rigide, comprenant une surface de contact destinée à assurer le positionnement du dispositif par contact avec une des pièces à assembler ;
- un coffret de capacité réglable relié en parallèle à la bobine d'induction ;
- un applicateur, séparé du coffret de capacité et portant la bobine d'induction, ledit applicateur étant pourvu de moyens de mesure de température ;
le dispositif étant agencé de sorte que la distance entre la bobine d'induction et la surface de contact est fixe, la surface de contact étant sensiblement perpendiculaire à l'axe d'enroulement de la bobine.

Le contrôle de la distance entre la bobine d'induction et la surface de contact, combiné au contrôle de la fréquence d'induction par le coffret de capacité permet de convoyer l'énergie de chauffage au plus proche de l'adhésif placé entre les plaques en limitant l'effet de cage de Faraday dans le cas d'une plaque en matériau composite. L'asservissement en température rendu possible par la présence de la mesure en température permet de piloter l'énergie de chauffage de sorte à éviter toute brûlure. Le contrôle de la fréquence permet en outre de chauffer par transparence directement la surface de contact entre la couche adhésive et la plaque.

L'invention peut être mise en oeuvre selon les modes de réalisation exposés ci-après, lesquels peuvent être considérés individuellement ou selon toute combinaison techniquement opérante.

Dans une réalisation, la tête de contact est en matériau électriquement isolant.

Dans une réalisation, la tête de contact est démontable.

Dans une réalisation, la tête de contact est interchangeable, son épaisseur permettant de faire varier la distance entre la bobine d'induction et la surface de contact.

Dans une réalisation, des moyens de pression sont disposés en regard de la surface de contact.

Selon un mode de réalisation avantageux, le coffret de capacité réglable comprend un jeu de capacités permettant de régler la fréquence entre 70 kHz et 140 kHz. Cette gamme de fréquence est particulièrement avantageuse pour le chauffage par induction de l'interface d'assemblage pièces composites comportant un renfort fibreux sous la forme de fibres de carbone.

Selon ce mode de réalisation avantageux le coffret de capacité réglable comprend deux blocs de deux capacités en série, lesdits blocs étant connectés en parallèles. Cette configuration permet de faire varier la fréquence dans la gamme désirée de manière économique par combinaison en série ou en parallèles des capacités.

Dans une réalisation, la bobine d'induction est une bobine à double enroulement. Cette configuration permet, de manière surprenante, une pénétration plus concentrée et plus profonde du flux magnétique.

Dans une réalisation, la liaison électrique entre l'applicateur et le coffret de capacité est réalisée au moyen d'amenées souples.

Ainsi le dispositif objet de l'invention permet d'assurer un chauffage particulièrement optimisé, avec un rendement et une localisation du chauffage maximisés

Dans une réalisation, chaque amenée comprend un tuyau isolant au sein duquel on fait circuler un fluide caloporteur et comprenant un conducteur électrique souple, par exemple en cuivre.

Dans une réalisation, les amenées sont disposées à l'intérieur d'une gaine de protection flexible.

Dans une réalisation, le dispositif comprend une ou plusieurs poignées de manipulation, afin d'être mis en oeuvre par un opérateur.

Dans une réalisation, le dispositif comprend des moyens pour être fixé à un bras robotisé.

Ainsi le dispositif objet de l'invention permet un positionnement efficace, précis et répétable de la bobine d'induction vis-à-vis des pièces à assembler

L'invention concerne également un système d'assemblage mettant en oeuvre un dispositif tel que défini ci-dessus, et comprenant un générateur d'induction relié électriquement en parallèle au dispositif.

Dans une réalisation, le système d'assemblage comprend un support de maintien des pièces à assembler et une console de support du générateur et du dispositif d'assemblage.

Dans une réalisation, la console de support comprend un bras articulé de support du dispositif d'assemblage.

L'invention exposée ci-après de manière détaillée selon ses modes de réalisation préférés, nullement limitatifs, en référence aux figures 1 à 10 dans lesquelles :
- les figures 1 et 2 montrent le principe de collage par induction selon l'invention ;
- les figures 3 à 7 montrent des perspectives d'ensemble ou partielles des différents composants d'un dispositif selon l'invention ;
- la figure 8 montre une réalisation d'un système selon l'invention ;
- la figure 9 représente un assemblage de deux pièces, de profil et en coupe ;
- et la figure 10 est un schéma électrique de principe illustrant le mode de réglage de la fréquence d'induction à partir de la connexion et série ou en parallèle de capacités.

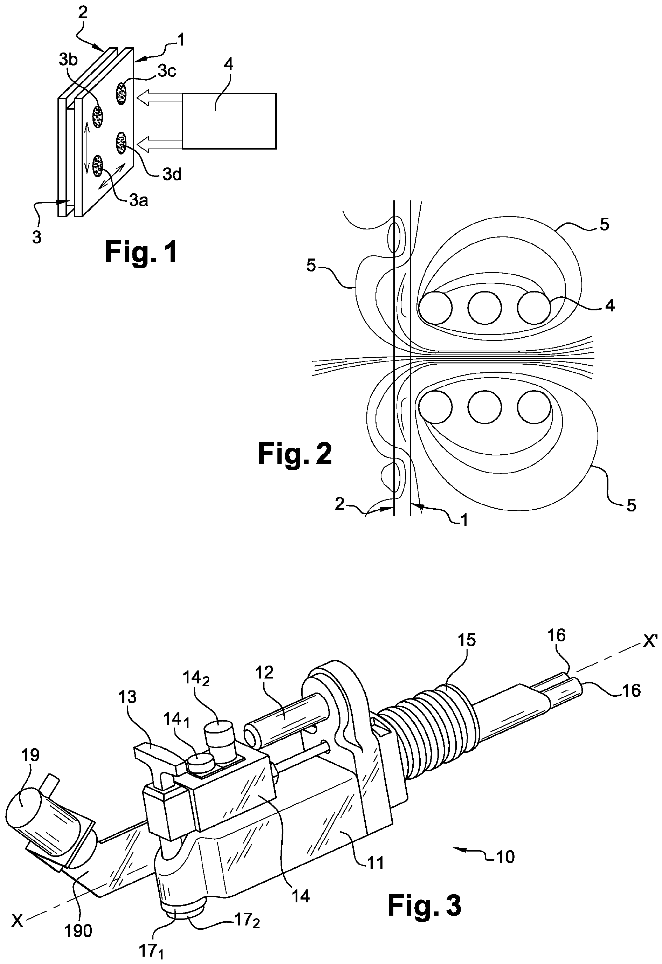

La figure 1 montre un exemple de collage que l'on souhaite pouvoir réaliser avec un dispositif selon l'invention. Il s'agit de coller deux plaques 1 et 2 (dans l'exemple deux échantillons de taille réduite) en matériau électriquement conducteur, par exemple des matériaux métalliques ou des matériaux composites contenant des fibres de carbone. L'ensemble des exemples fournis dans la présente description s'applique à l'assemblage de deux pièces électriquement conductrices, mais il est entendu que l'invention s'applique également à l'assemblage de deux pièces dont seulement l'une est en un matériau électriquement conducteur. Pour pouvoir assembler ces plaques par collage, on prévoit un adhésif activable thermiquement, par exemple un adhésif thermodurcissable 3, destiné à être chauffé par conduction, avec lequel on va encoller les faces à assembler des plaques 1 et 2. Afin de réaliser des points de fixation en une pluralité d'endroits espacés 3a, 3b, 3c, 3d, chacun de ces endroits va être successivement chauffé pour obtenir le durcissement de l'adhésif. Cet adhésif pourra être « chargé » ou non, c'est-à-dire contenir ou non des particules conductrices le rendant réactif au chauffage par induction. Le principe de chauffage par induction mis en oeuvre par l'invention est représenté sur la figure 2 : une bobine d'induction 4 (ici représentée en coupe) est amenée à proximité de l'ensemble formé par les deux plaques dont les faces en regard sont encollées. L'axe de la bobine 4 est sensiblement perpendiculaire à la surface de la plaque avant 1, elle-même sensiblement parallèle à la plaque arrière 2. Le chauffage de l'adhésif est indirectement réalisé, comme montré sur la figure 2, au moyen de la bobine d'induction 4 : celle-ci va permettre de chauffer les plaques à assembler, qui chaufferont l'adhésif par conduction thermique. En effet, lorsque la bobine 4 est alimentée par des courants alternatifs d'intensité et de fréquence prédéterminées, elle génère un champ électromagnétique (dont la forme générale des lignes de champ 5 est représentée sur la figure 2) qui induit des courants dans les plaques 1 et 2 qui sont conductrices. Afin de pouvoir chauffer efficacement l'adhésif, il est nécessaire que le champ magnétique atteigne non seulement la plaque avant 1, mais également la plaque arrière 2.

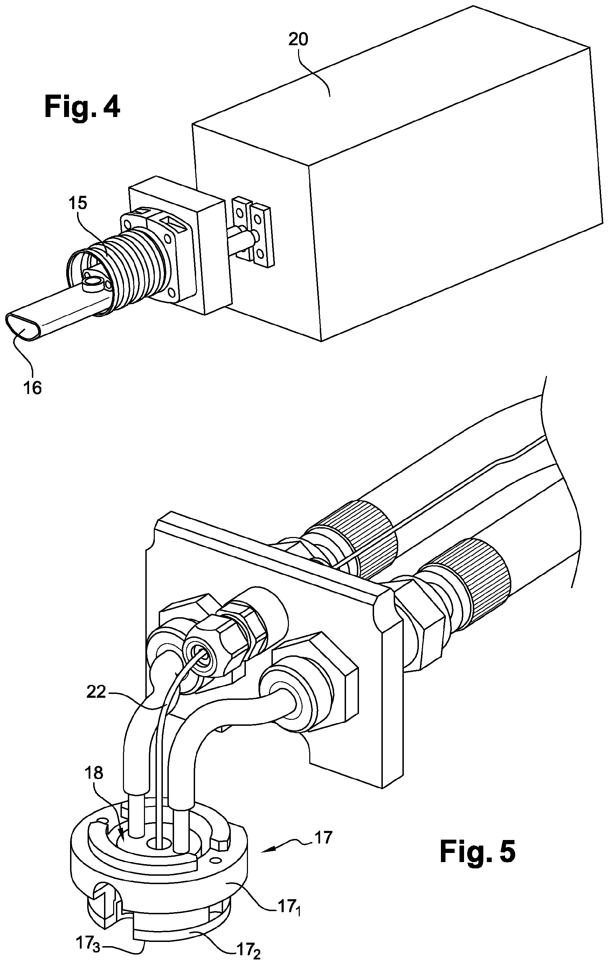

Les figures 3 et 4 montrent un exemple de réalisation d'un outil de collage selon l'invention : il comprend dans cette configuration un applicateur 10 et un coffret de capacité séparé 20. Le coffret de capacité 20 contient une série de condensateurs montés en parallèle et qui peuvent être séparément connectés ou déconnectés au moyen d'un système de plots, de manière à faire varier la capacité totale du coffret de capacité 20. Ce caractère adaptable du coffret de capacité permet d'optimiser le fonctionnement de l'applicateur 10 en fonction du générateur d'induction devant l'alimenter. En effet, pour utiliser le générateur d'induction à la fréquence désirée et à une puissance optimisée, il est nécessaire que l'impédance totale de la charge qu'il alimente, que l'on peut assimiler à un circuit de type « RLC », soit adaptée à son impédance propre. La résistance R et l'inductance L de la charge étant très fortement déterminées par les inducteurs et les éléments à chauffer, la capacité C de la charge s'impose donc comme la variable d'ajustement, celle qu'il est le plus simple de faire varier pour obtenir l'impédance voulue. De fait, un coffret de capacité séparé offre un accès facilité au système de plots permettant le réglage de la capacité. Bien entendu, dans une application qui permettrait l'utilisation d'une capacité fixe prédéterminée, le coffret de capacité pourrait faire partie intégrante de l'applicateur 10.

En pratique, le coffret de capacité réglable va permettre d'ajuster très finement la fréquence du courant fourni par le générateur d'induction à l'intérieur d'une plage de fréquences compatible avec son fonctionnement. En effet, dans la plupart des applications de la présente invention, les moyens inductifs seront pilotés prioritairement en fréquence : on cherchera en effet en premier lieu à alimenter la bobine d'induction à une fréquence déterminée car pour des matériaux aux caractéristiques fixées, la fréquence des courants inducteurs déterminera la profondeur de pénétration du champ magnétique (et donc l'épaisseur de matériau sujet au chauffage par induction). Ainsi, la fréquence du courant alternatif alimentant la bobine 18 sera déterminée précisément pour chaque application, notamment en fonction de la nature et de l'épaisseur des matériaux à assembler. En effet, toujours dans le but de maximiser l'efficacité de l'outil conforme à l'invention, on s'attachera à ce que le champ magnétique qu'il génère traverse la première plaque et atteigne de façon certaine la face antérieure de la deuxième plaque. On doit en effet s'assurer que les faces en contact des deux plaques à assembler sont correctement chauffées. Pour un matériau donné, on sait que la profondeur de pénétration du champ magnétique généré par la bobine sera fonction de la fréquence de celui-ci, donc de la fréquence du courant fourni par le générateur d'induction. Cette fréquence permettra donc d'ajuster finement le fonctionnement de l'applicateur selon les pièces à assembler.

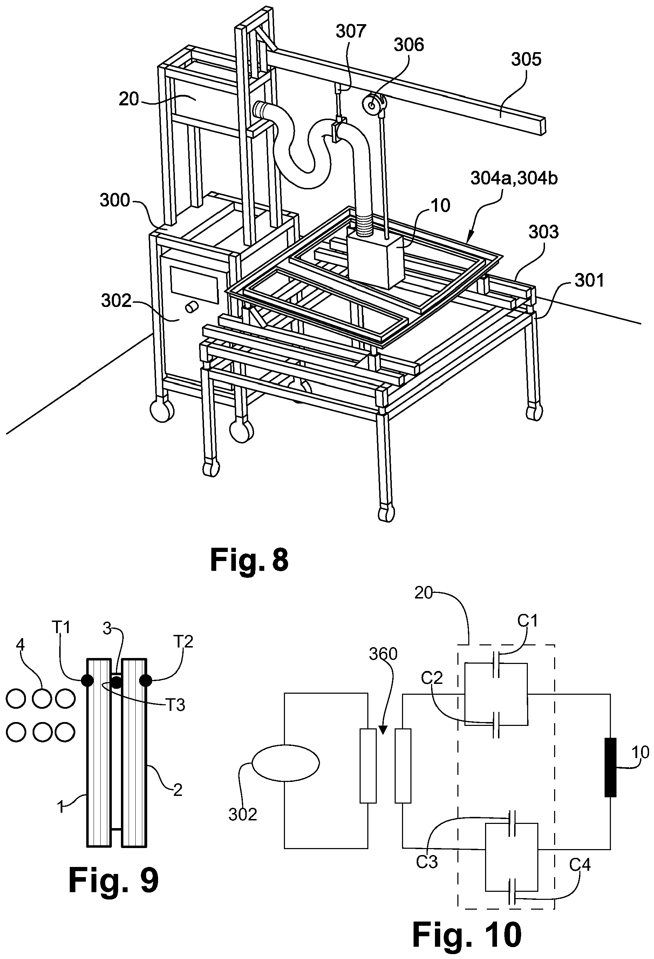

Figure 9, plus précisément la fréquence de l'induction est pilotée dans une gamme comprise en 70 kHz et 140 kHz en fonction de la nature et de l'épaisseur des pièces 1 et 2 à assembler, de telle sorte que la température T3 dans l'adhésif atteigne la température de réticulation dudit adhésif dans toute son épaisseur alors que les températures T1 et T2 des pièces à assembler, et plus particulièrement la température T1 sur la surface de la pièce 1 côté bobine d'induction, restent inférieures à la température de dégradation thermique de la matière constituant lesdites pièces. Dans le cas où les pièces à assembler sont constituées d'un matériau composite comportant un renfort fibreux, ledit renfort étant électriquement conducteur, dans une matrice, notamment époxyde, électriquement et thermiquement isolante, le choix de la fréquence d'induction est primordial pour obtenir un chauffage de l'adhésif par l'intermédiaire des deux pièces. Ainsi, lorsque le renfort est placé sous forme de plis s'étendant selon des surfaces sensiblement parallèles à l'interface d'assemblage, une fréquence trop élevée du courant d'induction, par exemple supérieure à 140 kHz, échauffe la couche de renfort placée la plus proche de l'inducteur, la chaleur se propageant très difficilement par conduction dans l'épaisseur de la pièce, de sorte que la résine se dégrade thermiquement avant que l'adhésif n'ait atteint la température adéquate de collage. Dans le cas d'utilisation d'une fréquence trop faible, par exemple inférieure à 50 kHz, les courants traversent l'épaisseur de l'assemblage sans provoquer d'échauffement significatif.

Par exemple, pour assembler deux panneaux composites comprenant une matrice époxyde renforcée de fibres de carbone dont le panneau avant, côté bobine d'induction, présente une épaisseur de 0,6 mm et le second présente une épaisseur de 2,5 mm, on prévoira une fréquence de l'ordre de 80 kHz, pour une puissance d'induction comprise entre 2,4 kW et 3,2 kW. Dans ces conditions, la température T3 maximale atteinte au cours de l'opération de collage est de l'ordre de 110 °C alors que la température T1 à la surface de la pièce côté bobine d'induction reste inférieure à 130 °C. D'une manière générale, pour une application donnée (matériaux et épaisseurs des pièces définis), l'applicateur sera alimenté par un courant alternatif de fréquence fixe.

Figure 10, le coffret de capacité réglable 20 est interposé entre le générateur 302 et l'applicateur 10. Les deux circuits sont séparés par un transformateur 360. Selon un exemple de réalisation de ce coffret 20, celui-ci comprend deux blocs de deux capacités C1, C2 et C3, C4 en parallèle, lesdits deux blocs étant connectés en série. La fréquence d'induction est obtenue en combinant les valeurs de capacités, par exemple :
- pour une fréquence de 82 kHz : C1=C2=C3=C4=2,5 µF ;
- pour une fréquence de 110 kHz : C1=C2=0,66 µF, les capacités C3 et C4 étant shuntées ;
- pour une fréquence de 138 kHz : C1=C2=0,66 µF, C3=2,5 µF et C4 étant shuntée.

On décrit ci-après l'outil de collage selon l'invention, dans sa variante avec coffret de capacité séparé. Selon les cas, l'applicateur 10 pourra être manipulé directement par un opérateur ou fixé au bout d'un bras de robot et donc mis en oeuvre automatiquement. La figure 3 présente une variante de l'applicateur plus particulièrement destiné à être utilisé directement par un opérateur. L'applicateur comprend un corps 11 d'axe XX', le corps comprenant à une extrémité avant une bobine d'induction d'axe sensiblement perpendiculaire à l'axe XX'. Le corps 11 comprend deux poignées de manipulation, une poignée principale ou poignée arrière 12 et une poignée auxiliaire ou poignée avant 13. La poignée principale 12 est disposée à proximité de la verticale du centre de gravité de l'applicateur, selon une direction sensiblement parallèle à l'axe XX'. La poignée auxiliaire 13 est quant à elle disposée en avant de la poignée principale 12. La poignée auxiliaire est disposée de telle sorte que l'axe formé par la jambe du « T » de la poignée est perpendiculaire à l'axe XX', cet axe étant proche voire confondu avec l'axe de la bobine d'induction. Ainsi, dans la configuration de la figure 3, l'applicateur 10 est prévu pour être principalement utilisé en position horizontale (c'est-à-dire avec l'axe XX' de direction sensiblement horizontale). Cette configuration est particulièrement adaptée à l'assemblage de panneaux disposés horizontalement, la poignée principale 12 permettant de soutenir l'applicateur tandis que la poignée auxiliaire 13 permet d'exercer un effort de pression de direction sensiblement verticale.

Entre les deux poignées 12, 13 est disposé, sur une partie supérieure du corps 11, un boîtier de commande 14, comportant dans l'exemple deux boutons de commande 14₁, 14₂, permettant à l'opérateur de commander les différentes fonctions de l'applicateur. À une extrémité arrière du corps est disposée une gaine flexible 15, par exemple en matière thermoplastique, qui contient les amenées 16 d'énergie, notamment de courant électrique et fluide de refroidissement. Ces amenées 16, ainsi que la gaine flexible 15, sont reliées au coffret de capacité 20. Selon les cas, la gaine 15 contenant les amenées d'énergie pourra être blindée afin de limiter le niveau de rayonnement électromagnétique dans l'environnement. Dans tous les cas, cette gaine 15 doit permettre les mouvements nécessaires à la mise en oeuvre de l'applicateur 10.

À l'extrémité avant du corps 11 est disposée une tête d'outil 17. La tête d'outil 17 comprend un carter de blindage rigide 17₁ à l'intérieur duquel est emprisonnée la bobine d'induction 18. Dans le but de mieux localiser le chauffage, le diamètre externe de la bobine sera peu important, par exemple inférieur à 30 millimètres. L'extrémité libre de la tête d'outil comprend une tête de contact 17₂. Conformément à l'invention la tête de contact 17₂ présente à son extrémité libre une surface de contact 17₃, de préférence sensiblement plane et sensiblement perpendiculaire à l'axe de la bobine d'induction 18. Cette surface de contact 17₃ assure la double fonction de permettre à l'opérateur d'une part, d'exercer un effort avec l'applicateur (afin d'exercer une contrainte de fluage sur l'adhésif et/ou obtenir un espacement déterminé entre les plaques) et, d'autre part, de bénéficier d'un référencement automatique sûr et répétable, la distance entre la bobine et la surface de contact étant invariable. Ainsi, on est certain que la bobine d'induction sera toujours disposée à une même distance prédéterminée de la plaque antérieure, quel que soit le nombre d'opérations de collage répétées. La figure 5 montre le corps 11 partiellement démonté, permettent de distinguer le carter de blindage 17₁ associé à la tête de contact 17₂. Dans l'exemple, la tête de contact 17₂ est constituée d'une pastille amovible électriquement isolante, par exemple en matière plastique, en élastomère, ou encore en matériau composite ou céramique. Comme la tête de contact 17₂ est amovible, on peut ainsi faire varier instantanément l'épaisseur de celle-ci par un simple échange avec une pastille d'épaisseur appropriée. On permet ainsi un réglage rapide et fin de la distance de référencement de la bobine vis-à-vis de la plaque sur laquelle doit être utilisé l'applicateur, tout en assurant la répétabilité requise.

Sur les figures 3 et 5, on peut voir que l'axe d'enroulement de la bobine est sensiblement perpendiculaire à l'axe XX' du corps 11. Cette configuration correspond à une ergonomie optimisée pour un opérateur. On peut toutefois envisager toute sorte de configuration alternative, notamment que l'axe de la bobine soit parallèle à l'axe du corps 11.

De manière avantageuse, l'applicateur 10 sera équipé d'un dispositif de mesure de la température tel qu'un pyromètre, permettant de contrôler la température de chauffe obtenue par l'applicateur. Dans l'exemple de la figure 3, on a prévu, sur la partie avant de l'applicateur, une sonde de mesure infrarouge 19, disposée à l'extrémité d'un bras de support 190. Dans l'exemple, la sonde 19 est positionnée de manière à mesurer la température de la plaque avant. On pourra également, en addition ou en substitution, positionner une sonde de manière à mesurer la température de la plaque arrière. Dans l'exemple de la figure 5, on a également représenté un système de mesure optique à réseaux de Bragg, comprenant une fibre optique 22 insérée dans la tête d'outil 17 de l'applicateur, et positionnée dans un trou débouchant sur la surface de contact de la tête de contact 17₂. Un tel système permet de mesurer la température au plus près de l'endroit chauffé par l'applicateur 10, et présente en outre l'avantage de ne pas être perturbé par le champ magnétique.

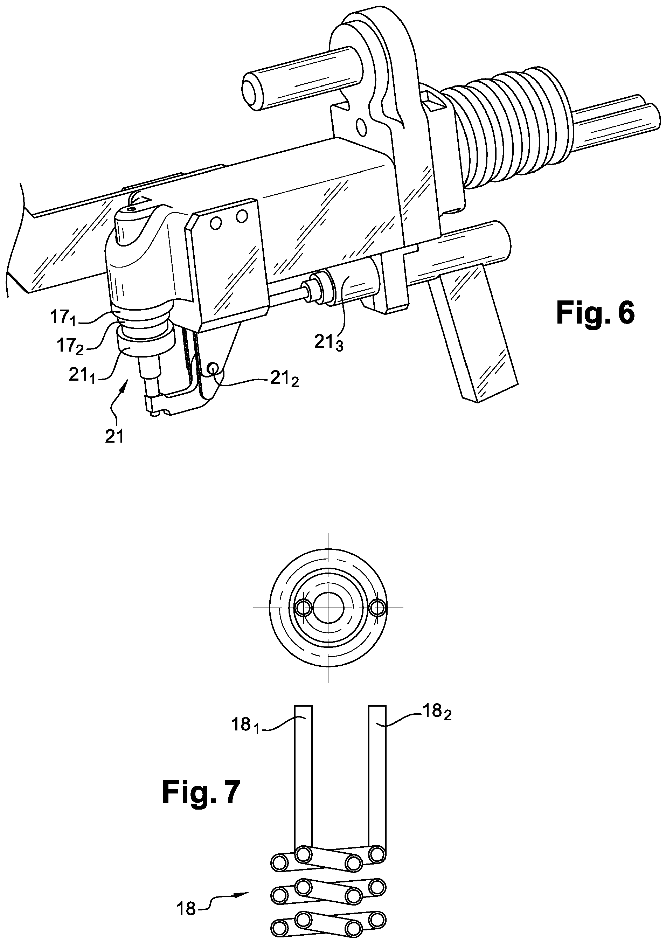

Dans une variante de réalisation de l'invention, l'applicateur est pourvu de moyens de pression 21 disposés en regard de la tête de contact 17₂, et permettant d'opérer, lorsque c'est possible et nécessaire, un pincement des deux pièces à assembler. Un exemple de réalisation de cette variante est montré sur la figure 6. Les moyens de pression 21 comprennent une mâchoire 21₁ disposée en regard de la tête de contact 17₂. Cette mâchoire est articulée sur un renvoi d'angle 21₂, et est ainsi actionnée par un actionneur pneumatique 21₃ disposé sous le corps 11, parallèlement à celui-ci. Cet actionneur peut être linéaire, par exemple un vérin pneumatique, ou rotatif, associé à un système écrou/vis sans fin. Ainsi, lors d'une opération de collage, la présence de ces moyens de pression va permettre le pincement des deux plaques à assembler entre la mâchoire 21₁ et la tête de contact 17₂, avec un effort prédéterminé, contrôlable et répétable, le tout de manière entièrement automatique.

Une variante de réalisation de la bobine d'induction 18 est montrée sur la figure 7 : au lieu d'une bobine classique formée d'un simple enroulement, on prévoit une bobine 18 comprenant un double enroulement. Ainsi, les deux brins d'alimentation de la bobine 18₁ et 18₂ forment deux enroulements concentriques, un enroulement interne de plus petit diamètre et un enroulement externe de plus grand diamètre. On réalise ainsi une bobine permettant d'obtenir une zone de chauffe plus restreinte et plus concentrée. De plus, on évite un phénomène inhérent aux bobines à simple enroulement : la perturbation des lignes du champ magnétique causée par l'un des brins d'alimentation qui longe la bobine (à l'extérieur ou à l'intérieur des spires de celle-ci), et qui rompt la symétrie centrale d'une bobine « idéale ».

Afin d'alimenter l'applicateur 10, il est nécessaire de prévoir un générateur d'induction, pouvant produire un courant alternatif d'intensité et de fréquence prédéterminées afin d'alimenter la bobine d'induction. Les paramètres de fonctionnement du générateur seront bien entendu adaptés en fonction de la nature du collage concerné (type de matériau à assembler, nature de l'adhésif, etc.). Par exemple, on prévoit des fréquences comprises entre 50 et 100 kHz pour des pièces à assembler en matériau composite à base de fibres de carbone, l'adaptation fine de la fréquence dépendant ensuite essentiellement des épaisseurs des pièces à assembler. Le coffret de capacité 20 est connecté en parallèle de la bobine d'induction 18. La liaison entre le générateur et le coffret de capacité est réalisée par de simples câbles électriques adaptés à l'intensité du courant fourni par le générateur. La liaison entre le coffret de capacité 20 et l'applicateur 10 constitue en pratique un inducteur sur toute sa longueur (en plus de la bobine 18 en elle-même), avec la perte de rendement et les problèmes de rayonnement électromagnétique que cela implique. Il y a donc intérêt, lorsque c'est faisable, à minimiser la longueur de la liaison coffret de capacité/applicateur au profit de la liaison générateur/coffret de capacité. Par ailleurs, le choix d'un applicateur et d'un coffret de capacité séparés permet notamment de réduire le poids de l'applicateur, ce qui est particulièrement intéressant dans le cas d'une manipulation manuelle de l'applicateur. On pourra toutefois envisager de réunir ces deux sous-ensembles dans un dispositif unique, par exemple si celui-ci est robotisé, ou, comme évoqué plus haut, si l'utilisation d'une capacité fixe est possible.

Dans l'exemple, le coffret de capacité est un coffret séparé, et il est relié électriquement à l'applicateur par des amenées souples. Ces amenées doivent permettre l'alimentation en courant de la bobine d'induction 18, tout en assurant un refroidissement de cette liaison qui peut être soumise à des courants de très forte intensité. Dans l'exemple, chaque amenée 16 comprend un tuyau isolant, par exemple en PVC armé, à l'intérieur duquel est disposé un conducteur électrique, par exemple une tresse de cuivre de diamètre adapté, et au sein duquel on fait circuler un fluide caloporteur tel que de l'eau. Les amenées 16 sont protégées au sein de la gaine flexible 15 reliant le coffret de capacité 20 à l'applicateur 10.

La figure 8 montre un exemple d'intégration de l'outil objet de l'invention au sein d'un poste de travail 30, formant ainsi un système d'assemblage conforme à l'invention. Le poste de travail comprend une console 300 et une table 301, ces deux éléments étant, dans l'exemple, roulants et indépendants. La table 301 est apte à supporter un cadre de fixation 303 destiné au maintien des pièces 304a, 304b à assembler. La console 300 est équipée de logements recevant respectivement le générateur d'induction 302 et le coffret de capacité 20. La console 300 est pourvue d'un bras horizontal de support 305 destiné à la suspension de la gaine d'amenées 15 ainsi qu'à celle de l'applicateur 10 au moyen d'un câble 307 et d'un dispositif à enroulement automatique, ou équilibreur 306. Le bras de support 305 est articulé autour d'un axe vertical par rapport à la console 302. Les éléments de suspension de la gaine 15 et de l'applicateur 10 sont aptes à se déplacer facilement le long du bras de support 305, permettant ainsi de ne pas entraver les mouvements de l'opérateur muni de l'applicateur 10.

Pour l'opérateur, la commande de l'outil conforme à l'invention peut être simplifiée au maximum, avec par exemple une commande unique déclenchant la chauffe pendant un temps prédéterminé si l'applicateur est piloté en temps de chauffe, ou jusqu'à ce qu'une température de consigne soit atteinte s'il est piloté en température. Dans le cas où l'outil est équipé de moyens additionnels de pression, cette commande unique peut également contrôler leur mise en oeuvre, également pendant un temps déterminé et avec une force prédéterminée. La mise en oeuvre des moyens de pression pourra être simultanée ou différée par rapport à la mise en oeuvre du chauffage, selon les besoins.

## Revendications

1. Dispositif d'assemblage pour le collage par points, au moyen d'un adhésif thermodurcissable (3) placé à l'interface d'assemblage, de deux pièces (1, 2) constituées d'un matériau composite comportant une phase conductrice susceptible d'agir comme une cage de Faraday dans une matrice isolante sensible à la dégradation thermique, lequel dispositif comporte:
- une bobine d'induction (18) ;
- un carter rigide (171) à l'intérieur duquel est disposée la bobine d'induction ;
- une tête de contact (172) située à une extrémité libre du carter rigide (171), comprenant une surface de contact (173) destinée à assurer lepositionnement du dispositif par contact avec une des pièces à assembler;
- un applicateur (10) séparé du coffret de capacité et portant la bobine d'induction, ledit applicateur étant pourvu de moyens de mesure de température (19, 22). ;
- le dispositif étant agencé de sorte que la distance entre la bobine d'induction et la surface de contact est fixe, la surface de contact (173) étant sensiblement perpendiculaire à l'axe d'enroulement de la bobine ;
- **caractérisé en ce qu'**il comprend un coffret de capacité (20) réglable relié en parallèle à la bobine d'induction (18) comprenant un jeu de capacités (C1, C2, C3, C4) pour régler la fréquence du courant électrique circulant dans la bobine d'induction entre 70 kHz et 140 kHz, de sorte à chauffer l'adhésif à sa température de réticulation sans dégrader lematériau constituant les pièces à assembler.

2. Dispositif selon la revendication 1, dans lequel la tête de contact (172) est en matériau électriquement isolant.

3. Dispositif selon la revendication 2, dans lequel la tête de contact (172) est démontable.

4. Dispositif selon la revendication 3, dans lequel la tête de contact (172) est interchangeable, son épaisseur permettant de faire varier ladistance entre la bobine d'induction et la surface de contact (173).

5. Dispositif selon la revendication 1, dans lequel des moyens de pression (21) sont disposés en regard de la surface de contact (173).

6. Dispositif selon la revendication 1, **caractérisé en ce que** le coffret de capacité (20) réglable comprend deux blocs de deux capacités (C1, C2 et C3, C4) en parallèle, lesdits blocs étant connectés en série.

7. Dispositif selon la revendication 1, dans lequel la bobine d'induction (18) est une bobine à double enroulement.

8. Dispositif selon la revendication 1, dans lequel la liaison électrique entre l'applicateur (10) et le coffret de capacité (20) est réalisée au moyen d'amenées souples (16).

9. Dispositif selon la revendication 8, dans lequel chaque amenée (16) comprend un tuyau isolant au sein duquel on fait circuler un fluide caloporteur et comprenant un conducteur électrique souple, par exemple en cuivre.

10. Dispositif selon les revendications 8 ou 9, dans lequel les amenées (16) sont disposées à l'intérieur d'une gaine de protection flexible (15).

11. Dispositif selon la revendication 1, comprenant une ou plusieurs poignées de manipulation (12, 13) afin d'être mis en oeuvre par un opérateur.

12. Dispositif selon la revendication 1, comprenant des moyens pour être fixé à un bras robotisé.

13. Système d'assemblage mettant en oeuvre un dispositif selon l'une des revendications 1 à 12, comprenant un générateur d'induction (302) relié électriquement en parallèle au dispositif.

14. Système d'assemblage selon la revendication 13, comprenant un support (301) de maintien des pièces à assembler et une console de support (300) du générateur (302) et du dispositif d'assemblage.

15. Système d'assemblage selon la revendication 13, dans lequel la console de support (300) comprend un bras articulé (305) de support du dispositif d'assemblage.

## Patentansprüche

1. Eine Vorrichtung zur Punktverklebung mittels eines Duroplast-Klebstoffs (3), die an der Baueinheit angeordnet ist und aus zwei Teilen (1, 2) besteht, die aus einem Verbundwerkstoff mit einem leitfähigen Abschnitt ausgefertigt sind, die wie eine gegenüber thermischem Abbau empfindliche Faradays - Schildkammer in einer Isoliermatrix verhalten kann, wobei die Vorrichtung das Folgende aufweist:
- eine Induktionsspule (18);
- ein robustes Gehäuse (171), innerhalb dessen die Induktionsspule angebracht wird;
- einen an einem losen Ende des robusten Gehäuses (171) angeordneten Kontaktkopf (172) mit einer Kontaktfläche (173), die dazu bestimmt ist, die Anordnung der Vorrichtung zur Kontaktabgabe mit einem der zu montierenden Teile sicherzustellen;
- einen von der Kondensatorbox getrennten Applikator (10) mit der Induktionsspule, wobei der vorgenannte Applikator mit den Mitteln zur Temperaturmessung (19, 22) ausgestattet wird;
- wobei die Vorrichtung so angeordnet ist, dass der Abstand zwischen der Induktionsspule und der Kontaktfläche festgelegt ist, und die Kontaktfläche (173) erheblich senkrecht zur Wickelachse der Spule verläuft;
- **dadurch gekennzeichnet, dass** sie eine einstellbare Kondensatorbox (20) enthält, die parallel zur Induktionsspule (18) mit einem Satz von Kondensatoren (C1, C2, C3, C4) zur Regelung der Frequenz des in der Induktionsspule fließenden elektrischen Stroms zwischen 70 kHz und 140 kHz eingeschaltet ist, um den Klebestoff zur Verteilungstemperatur zu erwärmen, ohne die Qualität des Materials zu vermindern, aus dem die zu montierenden Teile hergestellt werden.

2. Die Vorrichtung nach Anspruch 1 **dadurch gekennzeichnet, dass** der Kontaktkopf (172) aus einem elektrisch isolierenden Material besteht.

3. Vorrichtung nach Anspruch 2, **dadurch gekennzeichnet, dass** der Kontaktkopf (172) zerlegbar ist.

4. Vorrichtung nach Anspruch 3, **dadurch gekennzeichnet, dass** der Kontaktkopf (172) austauschbar ist, wobei seine Dicke den Abstand zwischen der Induktionsspule und der Kontaktfläche (173) verändern lässt.

5. Vorrichtung nach dem Anspruch 1, **dadurch gekennzeichnet, dass** der Stoff (21) unter Druck auf die Kontaktfläche (173) aufgebracht wird.

6. Vorrichtung nach dem Anspruch 1, **dadurch gekennzeichnet, dass** die einstellbare Kondensatorbox (20) zwei Blöcke mit zwei parallel zueinander eingeschalteten Kondensatoren (C1, C2 und C3, C4) aufweist, wobei die vorgenannten Blöcke in Reihe eingeschaltet werden.

7. Vorrichtung nach Anspruch 1, **dadurch gekennzeichnet, dass** die Induktionsspule (18) eine Spule mit einer Doppelwicklung ist.

8. Vorrichtung nach dem Anspruch 1, **dadurch gekennzeichnet, dass** die elektrische Verbindung zwischen dem Applikator (10) und der Kondensatorbox (20) mittels flexibler Leitungen (16) erfolgt.

9. Vorrichtung nach dem Anspruch 8, **dadurch gekennzeichnet, dass** jede Leitung (16) ein Isolierrohr mit fließendem Kühlmittel und einen flexiblen elektrischen Leiter aufweist, der ggf. aus Kupfer ausgeführt wird.

10. Vorrichtung nach den Ansprüchen 8 und 9, **dadurch gekennzeichnet, dass** die Leitungen (16) innerhalb einer flexiblen Hülle (15) angeordnet werden.

11. Vorrichtung nach dem Anspruch 1, **dadurch gekennzeichnet, dass** sie einen oder mehrere Griffe (12, 13) zur Bedienung von einem Betreiber aufweist.

12. Vorrichtung nach dem Anspruch 1, **dadurch gekennzeichnet, dass** sie Mittel zur Befestigung an einem Roboterarm hat.

13. Montagesystem zur Sicherstellung der Ausführung einer Vorrichtung nach einem der Ansprüche 1 bis 12, **gekennzeichnet dadurch, dass** ein darin enthaltener Induktionsgenerator (302) elektrisch parallel zur Vorrichtung eingeschaltet ist.

14. Montagesystem nach dem Anspruch 13, **dadurch gekennzeichnet, dass** sie eine Stützeinrichtung (301) für die zu montierenden Teile und eine Trägerkonsole (300) für den Generator (302) und die Montagevorrichtung aufweist.

15. Montagesystem nach dem Anspruch 13, **dadurch gekennzeichnet, dass** die Trägerkonsole (300) einen die Montagevorrichtung tragenden Gelenkarm (305) aufweist.

## Claims

1. Device for the assembly by spot gluing, by means of a thermoset adhesive (3) placed at the assembly, of two parts (1, 2) made of a composite material comprising a conducting phase capable to act like a Faradays shielded room in an insulating matrix sensitive to thermal degradation, said device comprising:
- an induction coil (18);
- a rigid casing (171) inside of which the induction coil is laid out;
- a contact head (172) located at a loose end of the rigid casing (171), comprising a contact surface (173) intended to ensure the positioning of the device by contact with one of the parts to be assembled;
- an applicator (10) separated from the capacity box and carrying the induction coil, the aforementioned applicator being equipped with means for temperature measurement (19, 22);
- the device being arranged so that the distance between the induction coil and the contact surface is fixed, the contact surface (173) being appreciably perpendicular to the winding axis of the coil;
- **characterized in that** it comprises an adjustable capacity box (20), connected in parallel to the induction coil (18) comprising set of capacities (C1, C2, C3, C4) to regulate the frequency of the electrical current circulating in the induction coil between 70 Khz and 140 Khz, in order to heat the adhesive at its reticulation temperature without degrading material which the parts to be assembled are made of.

2. Device according to claim 1, wherein the contact head (172) is made of an electrically insulating material.

3. Device according to the claim 2, wherein the contact head (172) is dismountable.

4. Device according to claim 3, wherein the contact head (172) is interchangeable, its thickness enabling to vary the distance between the induction coil and the contact surface (173).

5. Device according to the claim 1, wherein pressurizing means (21) are laid out facing the contact surface (173).

6. Device according to claim 1, **characterized in that** the adjustable capacity box (20) comprises two blocks of two capacities (C1, C2 and C3, C4) in parallel, the aforementioned blocks being connected in series.

7. Device according to the claim 1, wherein the induction coil (18) is a coil with a double winding.

8. Device according to the claim 1, wherein the electrical connection between the applicator (10) and the capacity box (20) is carried out by means of flexible supplies (16).

9. Device according to claim 8, wherein each supply (16) comprises an insulating pipe in which a coolant circulates and comprising a flexible electrical conductor, made of copper for example.

10. Device according to claims' 8 or 9, wherein the supplies (16) are laid out inside a flexible sheath (15).

11. Device according to claim 1, comprising one or more handles (12, 13) in order to be used by an operator.

12. Device according to claim 1, comprising means to be fixed at a robotic arm.

13. Assembly system implementing a device according to one of claims 1 to 12, comprising an induction generator (302) electrically connected in parallel to the device.

14. Assembly system according to claim 13, comprising a holding support (301) of the parts to be assembled and a support console (300) for the generator (302) and the assembly device.

15. Assembly system according to claim 13, wherein the support console (300) comprises an articulated arm (305) supporting the assembly device.
